# EUROPEAN PATENT APPLICATION

(11) **EP 1 216 880 A2**
(43) Date of publication of application: **26.06.2002**
(21) Application number: 01310584.6
(22) Date of filing: 19.12.2001
(51) Int. Cl.: B60P 1/44

(54) **Apparatus and method for balancing two hydraulic rams or cylinders**

(30) Priority: 20.12.2000 GB 0030985
(71) Applicant: Ross & Bonnyman Limited, Forfar, Angus DD8 3DG (GB)
(72) Inventor: Dempsie, Keith Joseph, Coatbridge, Lanarkshire ML5 1HX (GB)
(74) Representative: Allan, Jamie

(57) **Abstract**

Apparatus and a method that are suitable for balancing or synchronising the movement of two moving devices (e.g. hydraulic rams or cylinders) that are not mechanically linked together so that they can move independently of one another. The apparatus includes at least one movement detection device 52 (e.g. a photo sensor) to monitor the movement of each moving device (10a, 10b), and a speed controller including an electronic control unit 70, and one or more solenoid flow control valves 74a, 74b. The distance travelled by, speed of, or acceleration/deceleration of each moving device (10a, 10b), can be used to determine if the moving devices (10a, 10b) are operating out of synchronisation. The speed controller is used to adjust the speed of at least one moving device (10a, 10b) so that they operate in synchronisation.

## Description

The present invention relates to apparatus and a method particularly for balancing two hydraulic rams or cylinders, and more particularly, but not exclusively, to lifting apparatus, especially to tail lifts that are mounted on vehicles. Tail lifts are typically mounted at the rear of the vehicle to enable the effective transfer of heavy objects between the ground and a load space in the vehicle. Although called a tail lift, such apparatus can also be located at the front or side of the vehicle instead of the rear, but it is conventional for tail lifts to be located at the rear of, for example, the load space of the vehicle.

Conventional designs of tail lifts generally incorporate a pair of spaced-apart columns at or near a rear opening of the vehicle load space, and a platform that is pivotally mounted e.g. *via* hinges at its base to the vehicle. The platform can generally be pivoted about the hinges to a vertical configuration in which it extends across the opening, or can be placed in a horizontal configuration to be raised and lowered relative to the columns for operation as a tail lift. The platform is typically attached to runners that are slidable on the columns and can typically be powered by cables and/or hydraulic rams in order to move the runners along a rear face of the columns.

A hydraulic ram or cylinder is typically located in each column, with each column located on a respective side of a rear opening of the vehicle load space. The hydraulic rams or cylinders are typically used to raise and lower the platform while it is in a horizontal configuration, generally between ground level and a floor or bed of the vehicle. One ram or cylinder can often move faster or slower than the other ram or cylinder, causing an imbalance between them that can tilt the platform to one side or the other depending on which hydraulic ram or cylinder is moving faster or slower. This can be dangerous if the platform tilts through a significant angle as heavy objects can slide on the platform, and the tilting of the platform can also cause structural damage to the platform and/or the tail lift itself.

According to a first aspect of the present invention there is provided a lifting apparatus that includes first and second moving devices for lifting a platform, the apparatus further including a movement detection device associated with each moving device that is capable of generating a signal that represents the amount of movement of the respective moving device, and a speed controller that is capable of adjusting the speed of at least one moving device.

According to a second aspect of the present invention, there is provided a method of controlling the movement of two hydraulic rams or cylinders, the rams or cylinders forming part of a lifting apparatus, the rams or cylinders being capable of moving the platform, the method comprising the steps of actuating the rams or cylinders to move the platform; monitoring the movement of each ram or cylinder; and adjusting the speed of one or both of the rams or cylinders.

The or each moving device typically comprises a ram or cylinder.

Each ram typically includes a piston that is moveable within a cylinder. The platform is typically attached to each ram at one end thereof. Each cylinder typically includes a piston that is moveable within the cylinder. The platform is typically attached to each piston at one end thereof.

The movement detection device typically comprises a photo sensor, and in certain embodiments, the device may have both a light emitter and a light detector. The movement detection device typically includes a slotted plate that is attached to the ram for movement therewith. The apertures or slots in the plate typically pass between the light emitter and the light detector as the piston is moved.
Typically, light from the light emitter is either blocked or allowed to pass to the detector. The apertures or slots typically allow light to pass to the detector. Light received at the detector typically causes the movement detection device to generate a pulse each time light is detected. The pulse from the movement detection device is typically transmitted to the speed controller.

In one embodiment, the distance between each aperture in the slotted plate is typically known and preferably set to a fixed distance (e.g. 1mm). Thus, each time light is detected, the cylinder has moved 1mm. This can be used to determine how far each cylinder has moved and then the distance moved by each cylinder can be compared to determine if one has moved farther than the other. Whether or not the cylinders are operating in synchronisation can be determined from this.

In an alternative embodiment, the speed of movement of the cylinders is typically measured. In this embodiment, the time taken for each cylinder to move a fixed distance (e.g. the time between each pulse) is measured, and the speed is typically calculated from this. The speed of each cylinder can thus be used to determine if one or other of the cylinders is operating out of synchronisation.

In a further alternative embodiment, the acceleration and/or deceleration of each cylinder can be measured to determine if they are operating out of synchronisation. This particular embodiment can be advantageous as it can allow for the movement of each cylinder to be predicted, thus making it easier to synchronise the movement of the cylinders.

The speed controller typically includes a microprocessor or a programmable logic controller (PLC). The microprocessor or PLC typically counts the number of pulses received from each speed detector device. Thus, the distance moved by the pistons in each cylinder can be compared by comparing the number of pulses received from each detector. A higher number of pulses received from one detector typically indicates that one ram has moved farther than the other.

Alternatively, the microprocessor can calculate the time taken between each pulse, and knowing the distance travelled (i.e. the distance between each aperture in the slotted plate), then the speed of each cylinder can be determined.

As a further alternative, the microprocessor can be used to calculate the acceleration and/or deceleration of each cylinder.

The rams typically comprise hydraulic cylinders or rams. It will be appreciated that the invention can be used with any ram or cylinder.

The speed controller typically includes an adjuster to adjust the speed of movement of each piston. The adjuster typically comprises two solenoid flow control valves, each valve being in fluid communication with a respective ram or cylinder. The solenoid flow control valve typically controls the amount of hydraulic fluid that is supplied to the ram or cylinder. Thus, the valves can be used to control the speed of operation of the rams or cylinders.

The microprocessor or PLC typically generates a pulse-width modulated signal that is transmitted to one or other of the solenoid control valves. A mark space ratio of the pulse-width modulated signal typically controls the opening of the valve, and thus controls the speed of the rams or cylinders.

Preferably, the speed controller is used to speed up the cylinder or ram that is moving slower than the other.

The step of monitoring the movement of each ram or cylinder typically includes the additional steps of counting the pulses received from each light detector, and comparing these to determine which, if either, cylinder or ram has moved farther than the other.

Alternatively, the step of monitoring the movement of each ram or cylinder typically includes the additional steps of calculating the time between each pulse received from each light detector, calculating the speed of each cylinder, and comparing the speeds to determine which, if either, cylinder or ram is moving faster than the other.

As a further alternative, the step of monitoring the movement of each ram or cylinder typically includes the additional steps of calculating the time between each pulse received from each light detector, calculating the speed of each cylinder, calculating the acceleration and/or deceleration of each cylinder, and comparing the accelerations to determine which, if either, cylinder or ram is accelerating and/or decelerating faster than the other.

The step of adjusting the speed of one or both of the rams or cylinders typically includes the additional step of opening or closing one of the solenoid flow control valves to adjust the amount of hydraulic fluid being passed to one or both of the rams or cylinders.

Embodiments of the present invention shall now be described, by way of example only, with reference to the accompanying drawings in which:
Fig. 1 is a view from the underside of a hydraulic cylinder slidably engaged in a column, the cylinder being provided with a portion of apparatus according to the present invention;
Fig. 2 shows a) an elevation and b) a plan view of a slotted plate forming part of the apparatus of the present invention;
Fig. 3 shows a) a rear view of a lifting apparatus according to a second aspect of the present invention and b) an enlarged view of part of the apparatus of Fig. 3a;
Fig. 4 shows a first exemplary pulse-width modulated signal and its associated analogue response;
Fig. 5 shows a second exemplary pulse-width modulated signal and its associated analogue response;
Fig. 6 shows a third exemplary pulse-width modulated signal and its associated analogue response; and
Fig. 7 shows a) a rear view of an alternative embodiment of a lifting apparatus according to a second aspect of the present invention and b) an enlarged view of part of the apparatus of Fig. 7a.

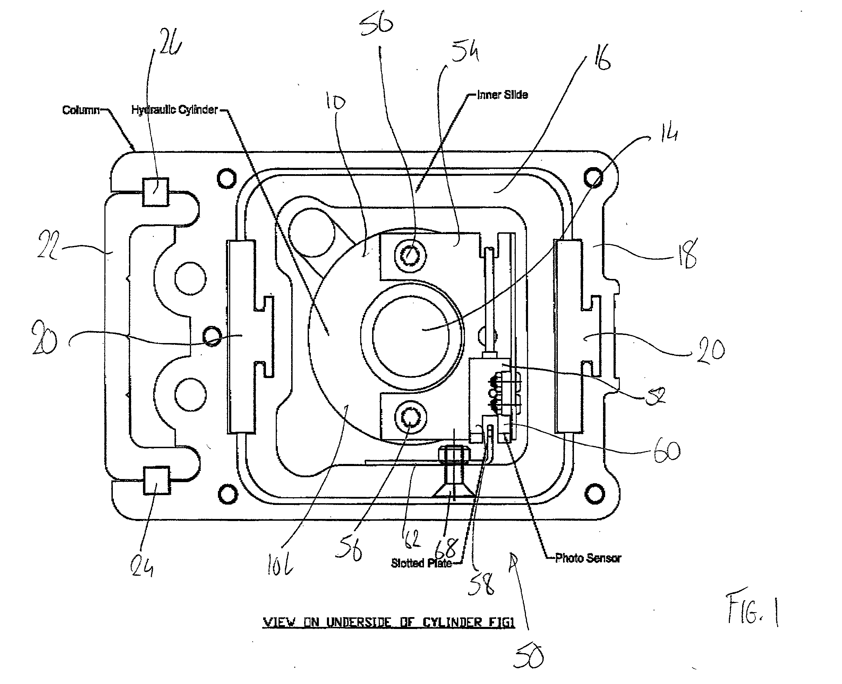

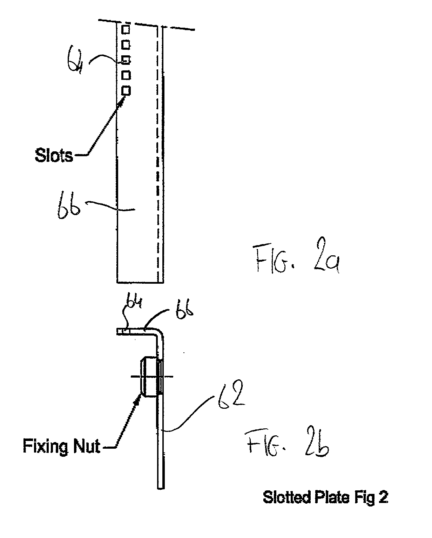

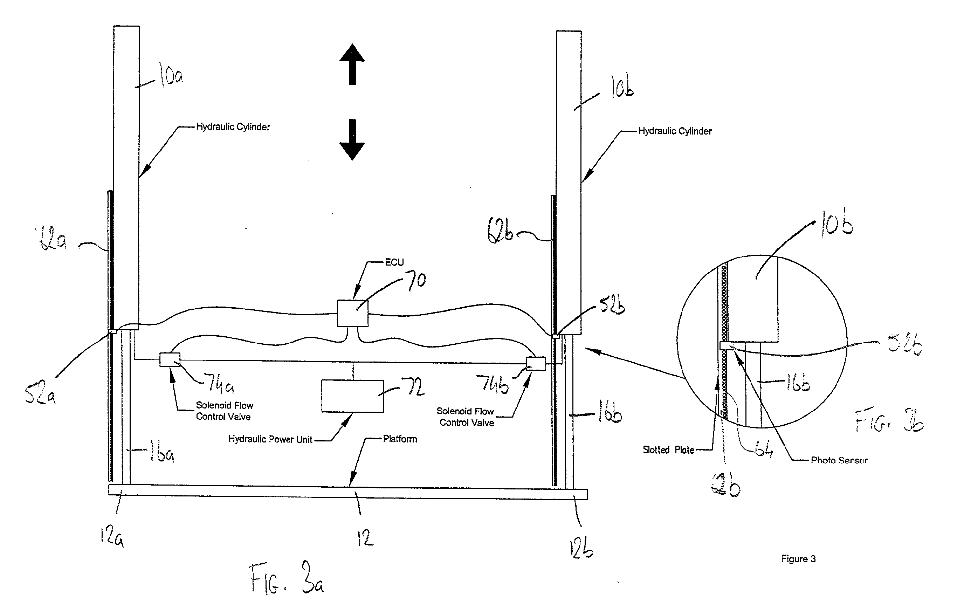

Referring to the drawings, Fig. 1 shows a view from the underside of a hydraulic ram or cylinder 10 that, in conjunction with a similar ram or cylinder, is used to raise and lower a platform 12 (Fig. 3a). The platform 12 forms part of a conventional tail lift that is provided at, for example, the rear of a vehicle. The platform 12 can assume a generally horizontal configuration where it is generally parallel to a floor or bed of the vehicle or a generally vertical configuration where it is generally perpendicular to the floor or bed of the vehicle.

The hydraulic cylinder 10 includes a rod or piston 14 that is coupled at a lower end thereof to the platform 12 and also to an inner slide 16, typically using a threaded nut that engages a lower threaded end of the piston 14.

The inner slide 16 can move within a column 18 substantially along a longitudinal axis of the column 18. Conventional tail lifts generally have a spaced-apart column 18 located on each side of an opening to the bed or floor of a vehicle (not shown). The inner slide 16 can slide within each column 18, typically on two nylon bearings 20. The sliding motion of the inner slide 16 is caused by longitudinal movement of the piston 14 within the hydraulic cylinder 10, the inner slide 16 being coupled at a lower end thereof to the platform 12 and the piston 14. Thus, movement of the piston 14 within the cylinder 10 causes movement of the inner slide 16 within the column 18, and thus allows the platform 12 to be raised and lowered.

Each column 18 is generally provided with a fixing clamp 22 that is provided with apertures (not shown) that allows the column 18 to be attached to the rear of the vehicle (e.g. using bolts). The clamp 22 is typically attached to the vehicle and the column 18 is held in place on the clamp 22 by the insertion of keys 24 that are typically inserted from the under side of the cylinder 10, and are then provided with caps (not shown) that retain the keys 24 in place. Thus, the column 18 is rigidly secured to the clamp 22, which in turn is rigidly attached to the vehicle.

Referring to Fig. 3 in particular, the cylinders 10a, 10b located on opposite sides of the opening to the vehicle load space are not mechanically linked other than through the platform 12. It will be appreciated that although the cylinders 10a, 10b are mechanically linked *via* the platform 12, the cylinders 10a, 10b can operate at different speeds as movement of the pistons 14 and thus the inner slides 16a, 16b are independent of one another.

The hydraulic cylinders 10a, 10b are conventionally actuated through a flow divider that splits the flow of hydraulic fluid typically equally between the cylinders 10a, 10b. The conventional flow divider typically has an accuracy of ±10% and thus the amount of fluid directed to one cylinder 10a, 10b may not be the same as that directed to the other cylinder 10a, 10b. In the worst case scenario, this could lead to an overall error of 20% between cylinder 10a with respect to cylinder 10b or vice versa (e.g. the flow divider delivers 10% more to cylinder 10a and 10% less to cylinder 10b). This difference between the cylinders 10a, 10b can lead to a tilting of the platform 12 to one side or the other. Such tilting of the platform 12 can lead to damage to the platform 12 itself and/or the tail lift.

The platform 12 generally has a tolerance of between 5 and 10mm difference between a first side 12a and a second side 12b of the platform 12, over a typical width of 2 metres.

Referring to Figs 1 and 2, one embodiment of the present invention provides an apparatus, generally designated 50, which can improve the synchronisation between hydraulic cylinders 10a, 10b thus lifting and lowering the platform 12 in a more level attitude.

Apparatus 50 includes a photo sensor 52 that is coupled to a lower face 101 of the cylinder 10 using a bracket 54. Bracket 54 can be attached to the cylinder 10 using any conventional means, e.g. threaded bolts 56. As will be appreciated, the photo sensor 52 includes an emitter 58 that emits a beam of light that can be detected by a light sensor 60 that also forms a part of the photo sensor 52. A slotted plate 62, best shown in Figs. 2a and 2b, is attached to an inside face of the inner slide 16, as shown in Fig. 1. The slotted plate 62 is a generally "L"-shaped plate that has a plurality of slots or apertures 64 in the shorter side 66. The plate 62 is attached to the inner slide 16 by any conventional means, typically by using a nut and bolt arrangement 68. The slots or apertures 64 in the shorter side 66 are arranged in a line that is parallel to the longitudinal axis of the hydraulic cylinder 10. The distance between each aperture 64 in the plate 62 is generally known and can be set at a fixed distance (e.g. 1mm).

In use, the plate 62 is attached to the inner slide 16 so that the shorter side 66 is located between the emitter 58 and the detector 60 of the photo sensor 52. As the inner slide 16 slides within the column 18, the apertures 64 allow light from the emitter 58 to pass therethrough and this light can be detected at the detector 60. It will be appreciated that the solid portions between the apertures 64 block the light and thus no light is received at the detector 60. Thus, the detector 60 receives a pulse of light from the emitter 58 each and every time a slot 64 passes between the emitter 58 and the detector 60.

Referring in particular to Figs 3a and 3b, the photo sensor 52 sends a signal or pulse to an electrical control unit (ECU) 70 each time light is detected at the detector 60. The ECU 70 can be a programmable logic controller (PLC) or preferably a microprocessor or the like. The ECU 70 counts the number of pulses of light that are received at the detectors 60a, 60b from each photo sensor 52a, 52b that are coupled to cylinders 10a, 10b respectively (Fig. 3a). The counting of the pulses can be used to determine if the cylinders 10a, 10b are operating in synchronisation. For example, if cylinder 10a has moved farther than cylinder 10b (that is, it has moved a greater distance in the same time), then the number of pulses received by the ECU 70 from the photo sensor 52a will be greater than the number of pulses received from the photo sensor 52b.

If the ECU 70 detects that one cylinder 10a, 10b is moving out of synchronisation with the other, then it can adjust the speed of one or other of the cylinders 10a, 10b so that the platform 12 is generally parallel with the truck bed. If cylinder 10a is operating slower than cylinder 10b so that cylinder 10b moves further than cylinder 10a, then cylinder 10a can be sped up. Alternatively, if cylinder 10a is operating faster than cylinder 10b so that cylinder 10a moves further than cylinder 10b, then cylinder 10a can be slowed down.

In certain embodiments, the distance between each aperture 64 is known (e.g. 1mm), so that a pulse is generated for every millimetre of movement of the cylinder 10a, 10b. Thus, the distance travelled by each cylinder 10a, 10b can be measured and this can be used to determine if they are operating out of synchronisation. This is particularly advantageous as it allows for direct measurement of the distance travelled by each cylinder to be measured and hence used to control the synchronisation of the cylinders 10a, 10b.

In other embodiments, the actual speed of movement of the cylinders 10a, 10b can be used by use of a clock to provide a time. The clock could be internal such as with the microprocessor ECU 70, or could be an external clock circuit. As distance is known (e.g. 1mm between each pulse), the time between each pulse can be recorded and this can be used to calculate the speed of each cylinders 10a, 10b. The speeds can then be compared to determine which cylinder 10a, 10b is moving faster than the other.

In a further alternative, the acceleration and/or deceleration of the cylinders 10a, 10b can be used to determine of they are operating in synchronisation. This embodiment is particularly advantageous as it can allow for the ECU 70 to predict which cylinder 10a, 10b is moving out of synchronisation before the difference in movement becomes excessive.

The cylinders 10a, 10b can be sped up or slowed down by adjusting the amount of hydraulic fluid that is transferred by a hydraulic power unit 72 to the hydraulic cylinders 10a, 10b. A solenoid control valve 74a, 74b is hydraulically linked to the hydraulic power unit 72 and the cylinders 10a, 10b.

The solenoid control valves 74a, 74b are also electrically coupled to the ECU 70. The solenoid flow control valves 74a, 74b control the amount of hydraulic fluid that is passed to the hydraulic cylinders 10a, 10b and can thus control the speed of operation of the cylinders 10a, 10b.

For example, if the ECU 70 detects that cylinder 10a is moving faster than cylinder 10b so that end 12a of platform 12 is raised higher than end 12b, then the ECU 70 sends a signal to solenoid control valve 74a to reduce the amount of hydraulic fluid to cylinder 10a to slow it down. The slotted plate 62a continues to move through the photo sensor 52a, as does slotted plate 62b through photo sensor 52b, and the ECU 70 continually monitors the speed of the cylinders 10a, 10b. Once the hydraulic cylinder 10a has been slowed so that it is in synchronisation with cylinder 10b, the signals from photo sensors 52a, 52b will be substantially equal and no further adjustment will be necessary (that is the number of pulses from the detectors 60a, 60b will be substantially the same). It will be appreciated that cylinder 10a is continually slowed *via* ECU 70 and the solenoid control valve 74a until it is in synchronisation with cylinder 10b.

In alternative embodiments, the distance moved by each cylinder 10a, 10b can be used to determine if they are operating out of synchronisation and to balance their movement. As a further alternative, the acceleration and/or deceleration of the cylinders 10a, 10b can be used to determine if they are operating in synchronisation.

The ECU 70 typically sends a pulse-width modulated signal to the solenoid flow control valves 74a, 74b with a particular mark space ratio to control the amount of fluid that is delivered to hydraulic cylinders 10a, 10b. Digital signals from the ECU 70 typically have two states, either "on" or "off" that correspond to a digital 1 or 0 respectively. A digital 1 is typically around 5 volts dc, and a digital 0 is typically 0 volts dc. The ratio of the on time to the off time (i.e. the ratio of the width of the digital 1 pulse to the digital 0 pulse) is termed the mark space ratio.

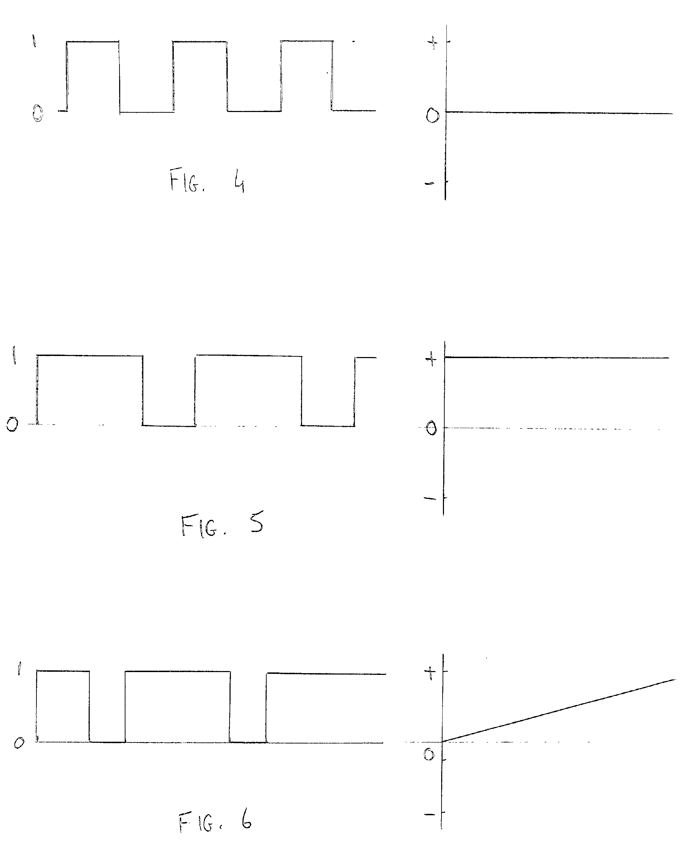

Referring to Figs 4 to 6, there is shown on the lefthand side of these figures a representation of the digital pulse-width modulation, and on the right-hand side, a representation of the analogue signal that corresponds to the pulse-width modulation. As can be seen from Fig. 4, the mark space ratio for the pulse-width modulation is equal (that is, the ratio of the "on" time to the "off" time is equal) and thus the analogue output is 0.

However, in Fig. 5, the ratio of the on time to the off time is not equal, as the pulse-width modulation is at a digital 1 for longer than it is at a digital 0. Thus, the analogue output is positive. If the pulse-width modulated signal is at a digital 0 for longer than it is at a digital 1, then the analogue output would be negative. The positive and negative analogue signals can be used to increase or decrease the speed of the hydraulic cylinders; a positive output would increase the speed, whereas a negative output would decrease the speed.

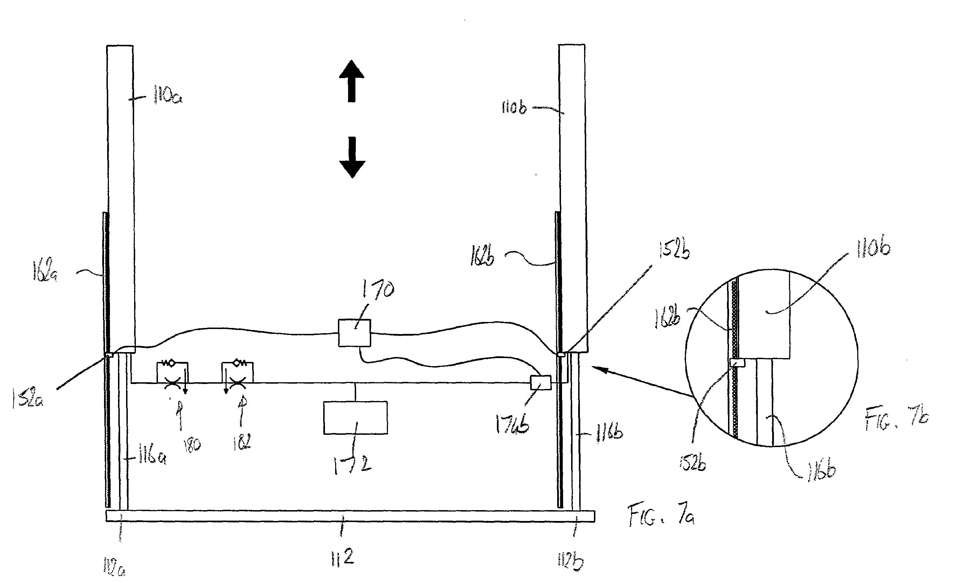

The speed of the hydraulic cylinders 10a, 10b can also be controlled as a ramp function (see right-hand side of Fig. 6). Gradually increasing the length of time that the signal is on compared to off (or vice versa) gradually increases the level of the positive or negative analogue signal. Thus, the speeding up or slowing down of the cylinders 10a, 10b can be accurately controlled.

The slotted plate 62a, 62b has slots 64 that cover the entire range of movement of the platform 12 (see Fig. 3a) so that the movement of the cylinders 10a, 10b can be monitored at all times to ensure that their movement is synchronised.

When the platform 12 is level with the floor or bed of the vehicle, this is used as a datum position that resets the counter in the ECU 70 and the hydraulic cylinders 10a, 10b are automatically hydraulically balanced when the platform 12 is in this position.

It will generally be appreciated that the preferred method to synchronise the cylinders 10a, 10b is to slow down the cylinder that is moving faster than the other. This is because there are potential hydraulic problems with speeding up the cylinder that is slower than the other because if the solenoid flow control valve 74a, 74b is opened up fully, the hydraulic cylinder cannot be made to go any faster and the imbalance between the ends 12a and 12b of platform 12 cannot be rectified.

Referring now to Figs 7a and 7b, there is shown a rear view of an alternative embodiment of a lifting apparatus 100 that is substantially the same as the previous apparatus. Like reference numerals shall be used to designate like parts, pre-fixed "1".

The two spaced-apart cylinders 110a, 110b are used to raise and lower the platform 112, and as before, the cylinders 110a, 110b are located on opposite sides of an opening to the vehicle load space and are not mechanically linked other than through the platform 112.

The embodiment shown in Figs 7a and 7b is substantially the same as the previous embodiment, but the apparatus, generally designated 150, which can improve the synchronisation between hydraulic cylinders 110a, 110b is slightly different.

In this embodiment, the ECU 170 has control over only one solenoid control valve 174b so that only the speed of cylinder 110b can be adjusted to synchronise the operation of the cylinders 110a, 110b. Cylinder 110a is provided with two flow control valves; a first valve 180 controls the flow of hydraulic fluid out of cylinder 110a, and a second valve 182 controls the flow into cylinder 110a. It will be appreciated that the flow control valves 180, 182 may control the flow into and out of the cylinder 110b, and the solenoid control valve 174b used to adjust the speed of the cylinder 110a.

As before, the photo sensors 152a, 152b sends a signal or pulse to the ECU 170 each time light is detected at the detectors 160a, 160b. The ECU 170 counts the number of pulses of light that are received at the detectors 160a, 160b from each photo sensor 152a, 152b that are coupled to cylinders 110a, 110b to determine if they are operating in synchronisation. This can be done by calculating the displacement, speed or acceleration/deceleration of each cylinder 110a, 110b, as described above.

If the ECU 170 detects that one cylinder 110a, 110b is moving out of synchronisation with the other, then it can adjust the speed of only cylinder 110b using the solenoid flow control valve 174b. Cylinder 110b can be sped up or slowed down by adjusting the amount of fluid into or out of cylinder 110b from the power unit 172 in the same way as the previous embodiment.

For example, if the ECU 170 detects that cylinder 110a is moving faster than cylinder 110b so that end 112a of platform 112 is raised higher than end 112b, then the ECU 170 sends a signal to solenoid control valve 174b to increase the amount of hydraulic fluid flowing into the cylinder 110b to speed it up. The slotted plate 162a continues to move through the photo sensor 152a, as does slotted plate 162b through photo sensor 152b, and the ECU 170 continually monitors the speed of the cylinders 110a, 110b. Once the hydraulic cylinder 110b has been sped up so that it is in synchronisation with cylinder 110a, the signals from photo sensors 152a, 152b will be substantially equal and no further adjustment will be necessary (that is the number of pulses from the detectors 160a, 160b will be substantially the same). It will be appreciated that cylinder 110b is continually sped up *via* ECU 170 and the solenoid control valve 174b until it is in synchronisation with cylinder 110a.

The ECU 170 uses a pulse-width modulated signal to the solenoid flow control valve 174b with a particular mark space ratio to control the amount of fluid that is delivered to hydraulic cylinder 110b, as before.

This particular embodiment offers the advantages that the system is less complex, and is easier and more cost effective to manufacture.

The present invention, in certain embodiments, therefore provides apparatus and a method that can be used to ensure that two hydraulic or other cylinders that are operating independently of one another are operating in synchronisation.

Modifications and improvements may be made to the foregoing without departing from the scope of the present invention. For example, it will be appreciated that the present invention has been described in relation to hydraulic cylinders, but it will be generally appreciated that the invention can be used with any type of cylinder. Also, the invention has been described in relation to a tail lift, but it will be appreciated that it could be used with any apparatus that includes two cylinders that require to be synchronised.

## Claims

1. Lifting apparatus that includes first and second moving devices (10a, 10b, 110a, 110b) for moving a platform (12, 112), the apparatus further including a movement detection device (52a, 52b, 152a, 152b) associated with each moving device (10a, 10b, 110a, 110b) that is capable of generating a signal that represents the amount of movement of the respective moving device (10a, 10b, 110a, 110b), and a speed controller (70, 170) that is capable of adjusting the speed of at least one moving device (10a, 10b, 110a, 110b).

2. Apparatus according to claim 1, wherein the movement detection device (52, 152) includes a light emitter (58) and a light detector (60).

3. Apparatus according to claim 1 or claim 2, wherein the movement detection device (52, 152) includes a slotted plate (62, 162) that is attached to the moving device (10, 110) for movement therewith.

4. Apparatus according to claim 3, wherein the apertures or slots (64) in the plate (62, 162) pass between the light emitter (58) and the light detector (60) as the moving device (10, 110) is moved.

5. Apparatus according to claim 4, wherein light received at the detector (60) causes the speed detection device (52, 152) to generate a pulse each time light is detected.

6. Apparatus according to claim 5, wherein the distance between each aperture or slot (64) is known.

7. Apparatus according to claim 6, wherein the pulse from the movement detection device (52, 152) is transmitted to the speed controller (70, 170).

8. Apparatus according to claim 7, wherein the speed controller (70, 170) counts the number of pulses received from each speed detector device (52).

9. Apparatus according to claim 8, wherein the speed controller (70) calculates the distance moved by each moving device and compares these to determine if the cylinders are operating out of synchronisation.

10. Apparatus according to claim 8, wherein the speed controller (70) calculates the speed of each moving device and compares these to determine if the cylinders are operating out of synchronisation.

11. Apparatus according to claim 8, wherein the speed controller (70) calculates the acceleration and/or deceleration of each moving device and compares these to determine if the cylinders are operating out of synchronisation.

12. Apparatus according to any one of claims 9 to 11, wherein the speed controller (70, 170) includes an adjuster (74, 174) to adjust the speed of movement of each moving device (10, 110).

13. Apparatus according to claim 12, wherein the adjuster comprises at least one solenoid flow control valve (74, 174), the valve (74, 174) being in fluid communication with a respective moving device (10, 110).

14. Apparatus according to claim 13, wherein the solenoid flow control valve (74, 174) controls the amount of hydraulic fluid that is supplied to at least one moving device (10, 110).

15. Apparatus according to claim 14, wherein the speed controller (70, 170) generates a pulse-width modulated signal that is transmitted to one or other of the solenoid control valves (74, 174).

16. Apparatus according to claim 15 wherein a mark space ratio of the pulse-width modulated signal controls the opening of the valve (74, 174).

17. A method of controlling the movement of two hydraulic rams or cylinders (10a, 10b, 110a, 110b), the rams or cylinders (10a, 10b, 110a, 110b) forming part of a lifting apparatus, the rams or cylinders (10a, 10b, 110a, 110b) being capable of moving a platform (12, 112), the method comprising the steps of actuating the rams or cylinders (10a, 10b, 110a, 110b) to move the platform (12, 112); monitoring the amount of movement of each ram or cylinder (10a, 10b, 110a, 110b); and adjusting the speed of one or both of the rams or cylinders (10a, 10b, 110a, 110b).

18. A method according to claim 17, wherein the amount of movement of each ram or cylinder (10a, 10b, 110a, 110b) is monitored using a movement detection device (52, 152).

19. A method according to claim 18, wherein the speed detection device (52, 152) includes a light emitter (58) and a light detector (60).

20. A method according to claim 19, wherein the speed detection device (52, 152) includes a slotted plate (62, 162) that is attached to each ram or cylinder (10a, 10b, 110a, 110b) for movement therewith.

21. A method according to claim 20, wherein the method includes the additional step of allowing the apertures or slots (64) in the plate (62, 162) to pass between the light emitter (58) and the light detector (60) as the rams or cylinders (10a, 10b, 110a, 110b) are moved.

22. A method according to claim 21, wherein the method includes the additional step of generating a pulse each time light is received at the detector (60).

23. A method according to claim 22, wherein the distance between each aperture or slot (64) is known.

24. A method according to claim 23, wherein the step of monitoring the movement of each ram or cylinder (10a, 10b, 110a, 110b) includes the additional steps of counting the pulses received from each light detector (60), and comparing these to determine which, if either, ram or cylinder (10a, 10b, 110a, 110b) has moved farther than the other.

25. A method according to claim 23, wherein the step of monitoring the movement of each ram or cylinder (10a, 10b, 110a, 110b) includes the additional steps of counting the pulses received from each light detector (60), calculating the speed of each ram or cylinder, and comparing the speeds to determine which, if either, ram or cylinder (10a, 10b, 110a, 110b) is moving faster than the other.

26. A method according to claim 23, wherein the step of monitoring the movement of each ram or cylinder (10a, 10b, 110a, 110b) includes the additional steps of counting the pulses received from each light detector (60), calculating the speed of each ram or cylinder, calculating the acceleration and/or deceleration of each ram or cylinder, and comparing the respective accelerations/decelerations to determine which, if either, ram or cylinder (10a, 10b, 110a, 110b) is accelerating and/or decelerating faster than the other.

27. A method according to any one of claims 24 to 26, wherein a speed controller (70, 170) is used to adjust the speed of at least one ram or cylinder (10a, 10b, 110a, 110b).

28. A method according to claim 27, wherein the speed controller (70, 170) includes an adjuster (74a, 74b, 174a, 174b) to adjust the speed of movement of each ram or cylinder (10a, 10b, 110a, 110b) .

29. A method according to claim 28, wherein the adjuster comprises at least one solenoid flow control valve (74a, 74b, 174a, 174b), the valve (74a, 74b, 174a, 174b) being in fluid communication with a respective ram or cylinder (10a, 10b, 110a, 110b).

30. A method according to claim 29, wherein the step of adjusting the speed of one or both of the rams or cylinders (10a, 10b, 110a, 110b) includes the additional step of opening or closing one of the solenoid flow control valves (74a, 74b, 174a, 174b) to adjust the amount of hydraulic fluid being passed to one or both of the rams or cylinders (10a, 10b, 110a, 110b).
